# EUROPEAN PATENT SPECIFICATION

(11) **EP 4 163 531 B1**
(45) Date of publication and mention of the grant of the patent: **26.03.2025**
(21) Application number: 22199384.3
(22) Date of filing: 03.10.2022
(51) Int. Cl.: F16L 37/14, F16L 25/00

(54) **AN INSTALLATION MECHANISM OF AN AIR VENTILATION HOSE IN AN END SEGMENT WITH A CYLINDRICAL RIM**
INSTALLATIONSMECHANISMUS EINES BELÜFTUNGSSCHLAUCHES IN EINEM ENDSEGMENT MIT ZYLINDRISCHEM RAND
MÉCANISME D'INSTALLATION D'UN TUYAU DE VENTILATION D'AIR DANS UN SEGMENT D'EXTRÉMITÉ AVEC UN BORD CYLINDRIQUE

(30) Priority: 07.10.2021 CZ 20210472
(43) Date of publication of application: 12.04.2023
(73) Proprietor: Svetlik, Miroslav, 25168 Kamenice (CZ)
(72) Inventor: Svetlik, Miroslav, 25168 Kamenice (CZ)
(74) Representative: Sedlák, Jirí

(56) References cited:
- EP-A1- 1 316 752
- EP-A1- 1 375 993
- DE-A1- 1 928 233
- GB-A- 631 745

## Description

### Field of Technology

Air ventilation systems, heat recovery systems, joining and connecting air ventilation hoses

### State of the Art

Currently, the air ventilation is becoming more and more popular also in new-build family houses. Whether it is air ventilation systems, heat recovery systems or controlled active air exchange. In current practice, the emphasis is primarily on the failure-free operation of the air ventilation system and on the simplicity and speed of its installation. Air ventilation hoses are standardized, always ribbed plastic hoses used for the distribution of gases. The standardized ribbing of air hoses for the European market is a rib approx. 0.7 cm wide with a groove between the ribs approx. 0.4 cm wide and 0.5 cm deep. The air ventilation hose is only seated by sealing it into the cylindrical end of the pipe, manifold, etc. The attachment and anchoring of the hose is done separately, outside the joint itself, usually in the ceiling. The hose is therefore not locked in the joint in any way and by simply pulling on the air ventilation hose the assembly is again detachable and therefore unstable. Usually, the position of the hose in the air ventilation system is secured with latches outside the joint and sealing rings directly in the joint.

Another variant of anchoring the air ventilation hose in the end segment is the drilling of short screws against each other into the end segment, where the tip of the screw is placed between the ribs of the air ventilation hose. The screws are placed on one axis passing through the center of the end segment. Such a fixing is only auxiliary, since when working with the air ventilation hose there is tension in the screws and the screws are pulled out of the end segment, which leads to the air ventilation hose coming loose from the end segment. In some cases, a screw may also be driven into the rib of the air ventilation hose, irreversibly damaging the air ventilation hose.

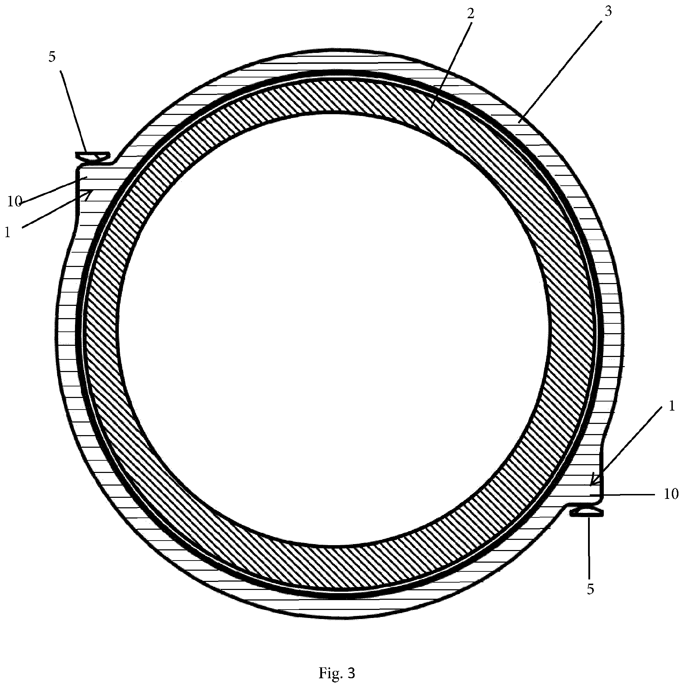

A re-lockable option for fixing the air ventilation hose in the end segment is the solution according to document CN 2385201Y, which fixes the hose in only one position. The locking pin has a recess that points into the center of the end segment when the pin is inserted into the end segment mounted on the air hose. To lock the hose in the end cap, the pin is rotated on its axis, which also rotates the recess and locks the pin body into the ribbing of the air hose, as seen in Figure 3 herein. To release the hose again, the pin is rotated to its original position, where the recess in the pin points back into the end segment and the hose is easily ejected from the end segment. This solution is practical for short-term air ventilation installations, e.g. in exhibition halls or at trade fairs, where the air ventilation layout requires frequent changes. This solution is not suitable for permanent mounting, as the pin can twist itself and release the air hose from the end segment.

Coupling device for corrugated hose or flexible pipes with a joint under EP 1316752 wherein a sealing element is provided on at least an end turn of an end of said hose or flexible pipe, in that said joint provides a seat for said end of said hose or flexible pipe, said seat having a depth such to house a part of hose or flexible pipe comprising at least a further turn, beside the one on which said sealing element is provided, in that openings are provided on the outer body of said joint, in correspondence of said further turn, when the hose or flexible pipe is introduced within said housing, said openings allowing the insertion of a substantially U-shaped fork element, that is placed with the two vertical arms straddling on said further turn of the hose or flexible pipe and with the horizontal arm outside the joint body, in such a way to lock the hose or flexible pipe in position.

### Description of the Invention

The invention is defined by independent claim 1, preferred embodiments are defined in dependent claims.

The air ventilation hose instaling mechanism in the end segment secures the air ventilation hose against sliding out of the end segment. The end segment can be a port, a sleeve, a manifold outlet, a pipe end cap, etc. At the same time, the air hose remains able to rotate around its longitudinal axis, which is a significant benefit when installing an air ventilation system. An air ventilation hose is therefore a hose with cylindrical cross-section with ribbing on the outer casing of the hose and a compact casing on the inner side of the hose. The ribbing is used here to fix the air ventilation hose in the cylindrical end segment. The installing pin is used to slide into the through guide channel of the cylindrical end segment and passes through the space between the ribs.

The installing mechanism comprises at least an installing pin and a guide channel located in the wall of the cylindrical end part of the end segment into which the air ventilation hose is inserted.

An imaginary installing space passes through the guide channel into which the installing pin is inserted. Preferably, the installing space is cylindrical and has a precisely defined position in the cylindrical part of the end segment where it performs an installing or fixing function. Thus, the inserted air ventilation hose in the cylindrical end segment is secured against re-ejection in one position, but at the same time it is rotatable in the cylindrical end segment. The installing space is terminated by a circle secant which forms the cross-section of the cylindrical end part of the end segment and this secant is spaced from the center of the cylindrical end segment by the inner radius r of the air ventilation hose and by a maximum of *r* + 6 mm. At the same time, the outer diameter of the air ventilation hose is smaller than the inner diameter of the cylindrical part of the end segment. The inner diameter of the cylindrical part of the end segment does not matter, and can be much larger than the outer diameter of the air ventilation hose. Then the wider space between the two cylindrical parts is filled with a seal. Preferably, the outer diameter of the air ventilation hose is no more than 3 to 5 mm smaller than the inner diameter of the cylindrical end part of the end segment. Then both parts fit well together, there is no wasted space between them. A seal is preferably located between the end segment and the air ventilation hose.

The guide channel is located in the wall of the cylindrical part of the end segment. The cylindrical part of the end segment has therefore a circular cross-section, and this circle is crossed by an imaginary secant terminating the installing space. Preferably, the installing space follows the guide channel and the through guide channel is cylindrical in shape and rests on the secant. In this case, the distance of the secant from the inner wall of the cylindrical part of the end segment is on a line through the center of the circle perpendicular to the secant from 3 mm to 8 mm.

**The position of the secant, which terminates the** installing **space, corresponds to the depth of the possible recess of the** installing **pin into the space between the ribs,** thereby securing the position of the hose in the end segment against both displacement and retraction. The installing position is defined by the space between the ribs of the air ventilation hose, where the pin is inserted into the space between the ribs in the installing position.

Or, to be functionally secured by the pin, the pin must pass through the wall of the cylindrical end part of the end segment and at least minimally recess into the space between the fins of the air ventilation hose. The recess shall be at least 2 mm and the depth of the space between the ribs of a standard air ventilation hose shall be 0.6 cm. In a situation where the pin is inserted longitudinally into the space between the ribs, its insertion may be through the space between the ribs. The depth of insertion of the installing pin in relation to the outer opening of the guide channel is then preferably e.g. 4 cm when it passes through the space between the ribs around the perimeter of the air ventilation hose.

The installing pin is preferably formed by a mandrel or pin which passes at least halfway through the depth of the cylindrical end segment, where it passes longitudinally through the space between the ribs when inserted into the channel in the cylindrical part of the end segment.

Therefore, the thickness of at least one side of the pin must be narrower than the space between the ribs. Preferably, at least one side of the pin is 2 to 5 mm thick.

The hose cannot be pulled out when the installing pin is inserted into the space between the ribs of the air ventilation hose, but it rotates freely around the circumference in the cylindrical part of the end segment, thus ensuring that the air ventilation hose does not fall out of the end segment after being secured by the pin.

The dimensions of the guide channel and the installing pin are also essential for the correct functioning of the installing mechanism. The projection of the guide channel always covers the entire projection of the installing pin without the head, both in top view along the longitudinal axis of the channel and in side view. The guide channel and the installing pin have circular cross-sections.

The installing pin shall have a minimum length corresponding to ½ the length of the circle secant. The pins are provided with fixing tabs.

The installing pin is cylindrical and the guide channel has a circular cross-section. Other shape variations such as oval or square or rectangular pin and channel cross-sections are also possible, but not covered by the appended claims, to prevent the installing pin from rotating in the guide channel during installation. The inner diameter of the guide channel is larger than the outer diameter of the installing pin by at least 0.1 mm. The widest cross-section of the pin with tabs is still at least 0.1 mm smaller than the cross-section of the guide channel. The fixing tabs are point-like or line-like, i.e. formed by either local hemispherical point-like tabs and/or raised lines.

The installing pin is provided with a head and a point, similar to a nail. The head exceeds the diameter or cross-section of the pin body and its cross-section is preferably circular. Preferably, the fixing tabs are located under the head of the installing pin. The installing pin has a length at least equal to ½ of the length of the circle secant which forms the cross-section of the cylindrical part of the end segment on which the longitudinal axis of the guide channel through which the pin passes lies. Preferably, however, the pin is longer than this secant.

The external form of the guide channel is also an important parameter for the correct functioning of the installing system. The guide channel can be made as a mere opening in the cylindrical part of the end segment, in which case the length of the channel is directly dependent on the wall thickness of the cylindrical part of the end segment. Preferably, the channel on the outside of the cylindrical part of the end segment is reinforced with a guide channel reinforcement tunnel, which extends the length of the guide channel and makes it easier to guide the installing pin and secure it in position. Preferably, the reinforcement tunnel extends the guide channel by 2 mm to 8 mm, longer reinforcement interferes with installation.

Since air ventilation hose end segments are generally made of plastic, the installing pin is preferably also plastic, especially in situations where the pin is secured by bending it, see section 6a) below. The installing pin may also be made of metal, particularly in situations where the pin is secured by passing through two opposing guide channels, see section 6b) below.

The number of guide channels on one cylindrical part of the end segment is not essential for the correct functioning of the installing mechanism, but it is essential for the convenient installation of the air handling unit. As already mentioned, the installing system comprises at least one installing pin and at least one guide channel through which the pin passes and thus at least one secant. Preferably, the cylindrical end part of the end segment is provided with two guide channels on one side of the ring secant through which one installing pin of a length greater than this secant passes. Preferably, guide through channels are located on the cylindrical end part of the end segment on two sections, with at least one guide channel formed on each secant, or two channels formed on each secant, or two channels formed on one secant and only one channel formed on the other secant. If there is a single channel on each secant then their positions are diagonal to each other, with their secants preferably parallel to each other. The following situations may occur:
One channel on secant A - one pin
Two channels on secant A - one pin
Two channels, one on secant A, the other on secant B - two pins
Three channels, two on secant A, one on secant B - two pins
Four channels, two on secant A, two on secant B - two pins

The distance of the guide channel from the end of the cylindrical part of the end segment is also important. It has proven preferable if it is at least 1.5 cm, which will ensure that the air ventilation hose is securely attached to at least one full rib, should the hose be split just at the rib. If the distance is less than 1.5 cm, the end of the hose could be deformed and the hose could pull out of the end cap.

The air ventilation hose is instaled in the cylindrical end part of the end segment as follows:
1) The ribbed air ventilation hose is inserted into the cylindrical end part of the end segment
2) an installing pin is inserted into the guide channel from the outside
3a) the installing pin passes through the guide channel and then through the groove between the ribs of the air ventilation hose, then step 6
3b) the installing pin passes through the guide channel and strikes a rib of the air ventilation hose
4) the air ventilation hose is slowly moved outwards from the end segment until the hose is extended up to 1/2 the width of the rib
5) the installing pin fits into the groove between the ribs of the air ventilation hose
6a) the installing pin, according to its length, passes through the groove between the ribs of the air ventilation hose until it hits the opposite wall of the cylindrical part of the end segment, against which it bends, thus fixing the air ventilation hose in the end segment
6b) the installing pin, according to its length, passes through the groove between the ribs of the air ventilation hose until it hits the opposite wall of the cylindrical part of the end segment, in which there is an opposite guide channel, the longitudinal axis of which is on the same axis, and into which the installing pin is inserted, thus fixing the air ventilation hose in the end segment.

### Summary

An air ventilation hose installation mechanism in a cylindrical end segment includes a installing pin and a guide channel, the wherein the installing pin comprises a installing pin body, wherein the body has a cylindrical rod shape, the installing pin body is terminated by a tip on one side and a head on the other side and is provided with fixing tabs that are linear or point-like, and a projection of the installing pin head along a longitudinal axis of the installing pin extends beyond the projection of the installing pin body,
and the guide channel is situated in the wall of the cylindrical end part of the end segment, this guide channel is cylindrical in shape and the wall of the guide channel is penetrated by the circle secant which forms the inner cross-section of the cylindrical end part of the end segment, wherein the secant is separated from the center of the circle by the inner radius r of the air ventilation hose and by a maximum of *r* + 6 mm, wherein the outer diameter of the air ventilation hose is less than the inner diameter of the cylindrical end part and the inner diameter of the guide channel is greater than the outer diameter of the installing pin, the installing pin having a minimum length equivalent to ½ the length of the circle secant.

Preferably, the end cap is a port, sleeve, reducer, pipe, curved pipe.

Preferably, the outer diameter of the installing pin body is at least 0.1 mm smaller than the inner diameter of the guide channel.

Preferably, the guide channel is provided with a guide channel reinforcement tunnel located on the outer side of the cylindrical end part of the end segment and extending the guide channel beyond the wall of the cylindrical end part of the end segment. Preferably, the cylindrical end part of the end segment has the inner diameter by up to 5 mm greater than the outer diameter of the air ventilation hose.

Preferably, the installing pin has a length greater than the cross-section of the circle secant which forms the cross-section of the cylindrical end part of the end segment. Preferably, the longitudinal axes of the two guide channels are parallel.

Preferably, the installation mechanism comprises at least two guide channels with a common longitudinal axis located on the same circle secant forming a cross-section of the cylindrical end part of the end segment and one installing pin which is used to pass through both guide channels.

Preferably, the installation mechanism comprises at least two guide channels arranged in the cylindrical end part of the end segment opposite each other on two different sections of the ring, and two installing pins each serving to pass through one guide channel. Preferably, the fixing tabs are located closer to the head than the tip of the installing pin. In another preferred embodiment, the fixing tabs are located along the entire length of the body of the installing pin.

### Summary of presented Drawings

- Fig. 1: Cross section of the end segment with four guide channels
- Fig. 2: Cross section of the end segment with four guide channels provided with reinforcing tunnels and air ventilation hose instaled with two installing pins
- Fig. 3: Cross section of the end segment with two guide channels provided with reinforcing tunnels and air ventilation hose instaled with two installing pins
- Fig. 4: Cross section of the end segment with one guide channel provided with reinforcing tunnel and air ventilation hose instaled with one installing pin

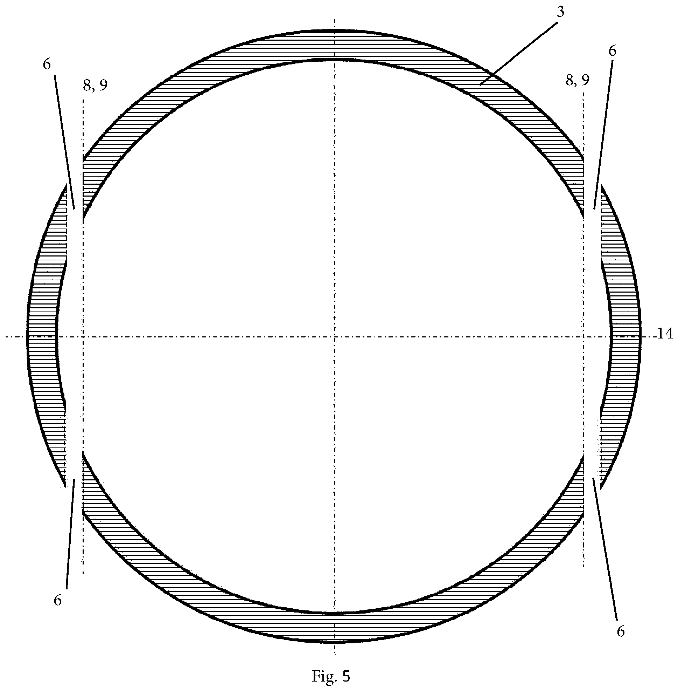

- Fig. 5: Cross section of the end segment with four guide channels and air ventilation hose instaled with two installing pins
- Fig. 6: A installing pin provided with head and tip with round cross-section

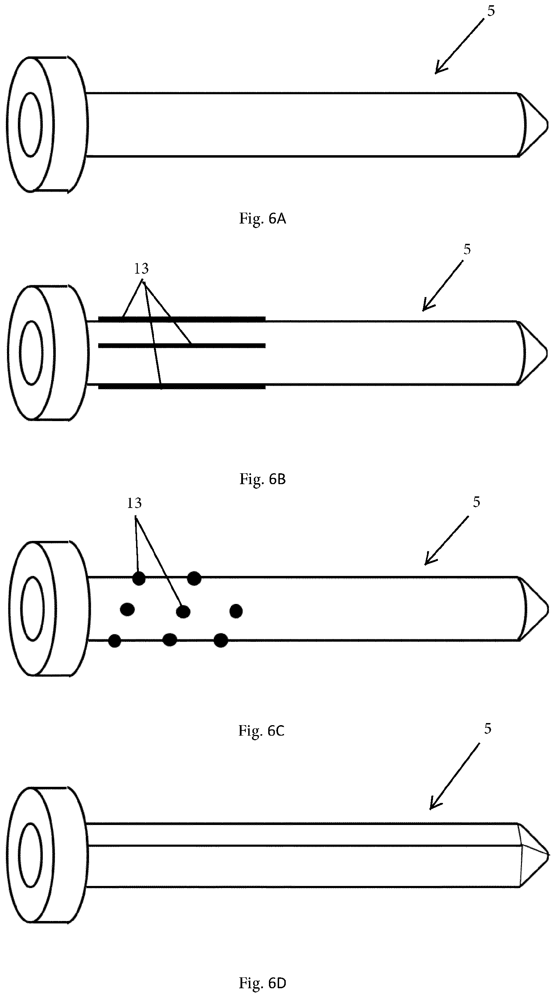

- Fig. 6: B installing pin, according to the invention, provided with head and tip with round cross-section and linear fixing tabs
- Fig. 6: C installing pin, according to the invention, provided with head and tip with round cross-section and point fixing tabs
- Fig. 6: D installing pin provided with head and tip with square cross-section

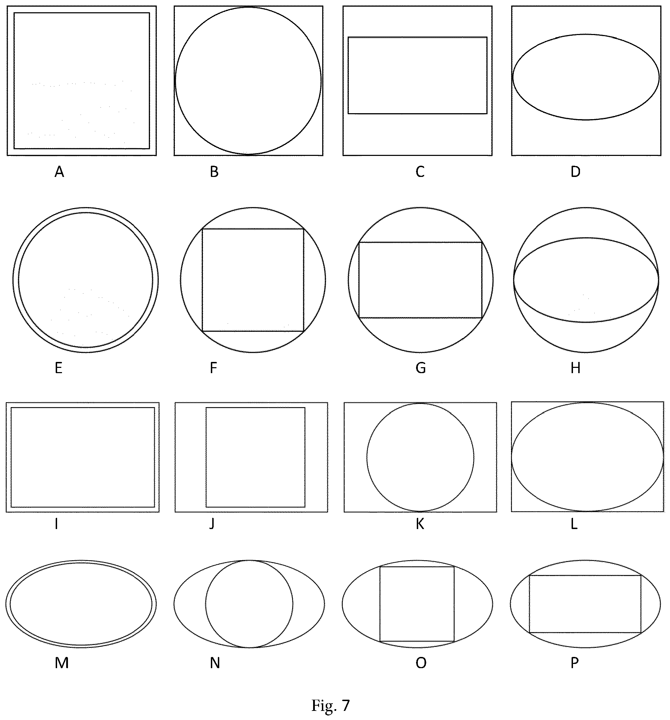

- Fig. 7: Examples of shape combinations of the installing pin inserted in the guide channel in cross-section; cross-section of the guide channel with the cross-section of the installing pin. A: square-square; B: square-circle; C: square-rectangle; D: square-ellipse; E: circle-circle; F: circle-square; G: circle-rectangle; H: circle-ellipse; I: rectangle-rectangle; J: rectangle-square; K: rectangle-circle; L: rectangle-ellipse; M: ellipse-ellipse; N: ellipse-circle; O: ellipse-square; P: ellipse-rectangle

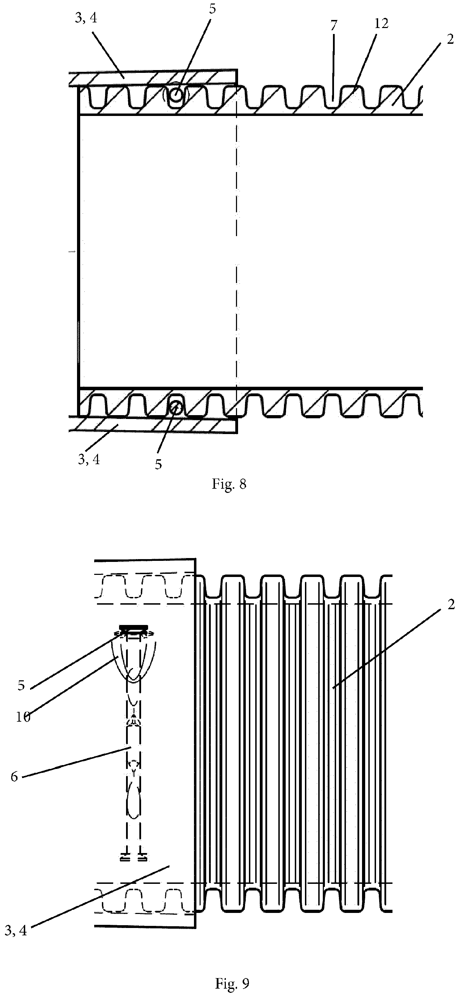

- Fig. 8: Air ventilation hose installed in the end segment, longitudinal cross-section
- Fig. 9: Air ventilation hose installed in the end segment, top view

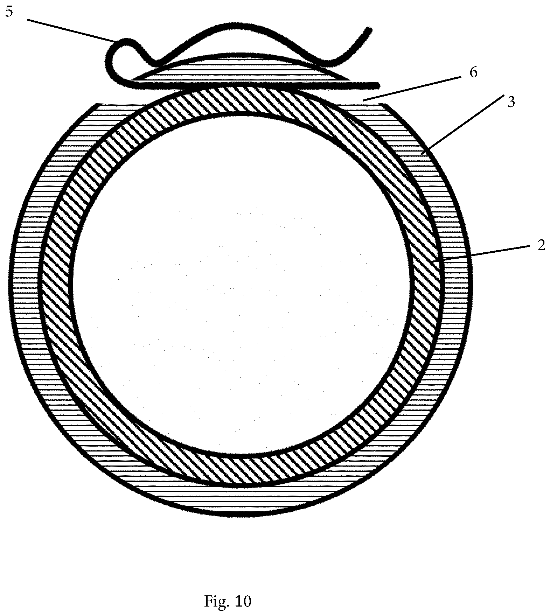

- Fig. 10: Cross section of the end segment with four guide channels and air ventilation hose installed with installing cotter pin

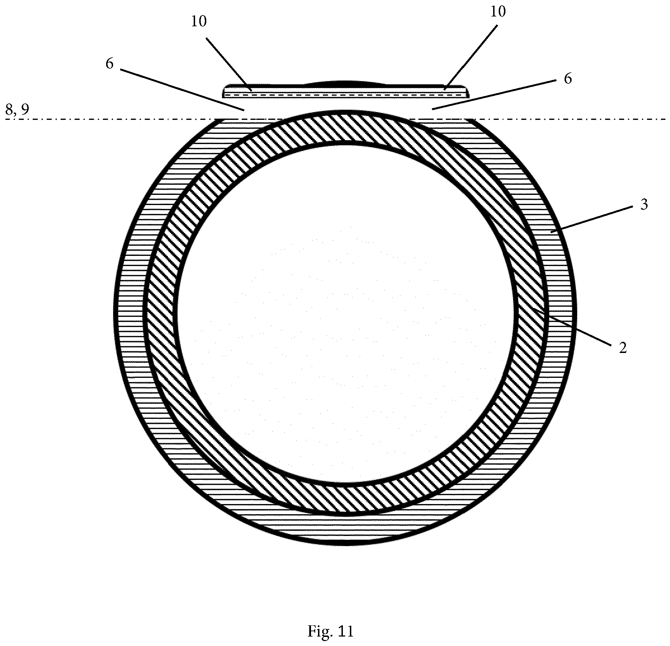

- Fig. 11: Cross section of the end segment with four guide channels provided with reinforcing tunnel and air ventilation hose

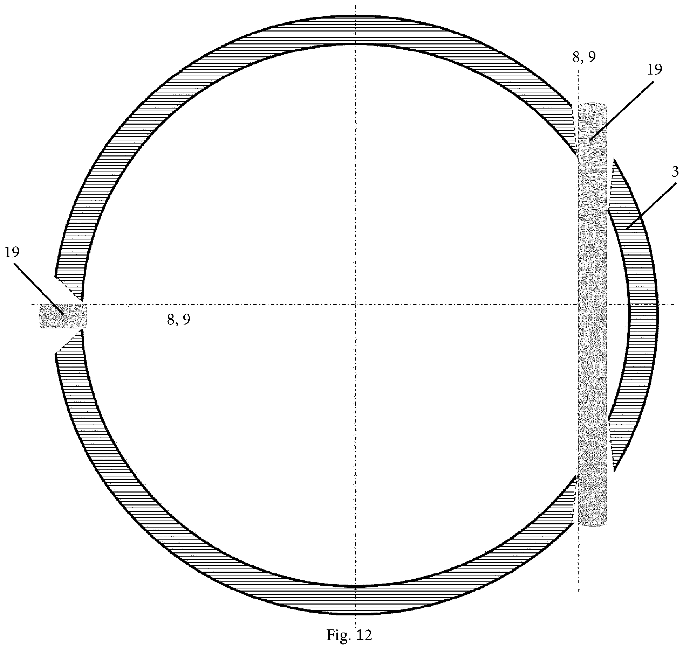

- Fig. 12: Cross section of the end segment with three guide channels, installing space

### Examples of Invention Embodiments

### Example 1

installing mechanism: one guide channel, one installing pin with head and point

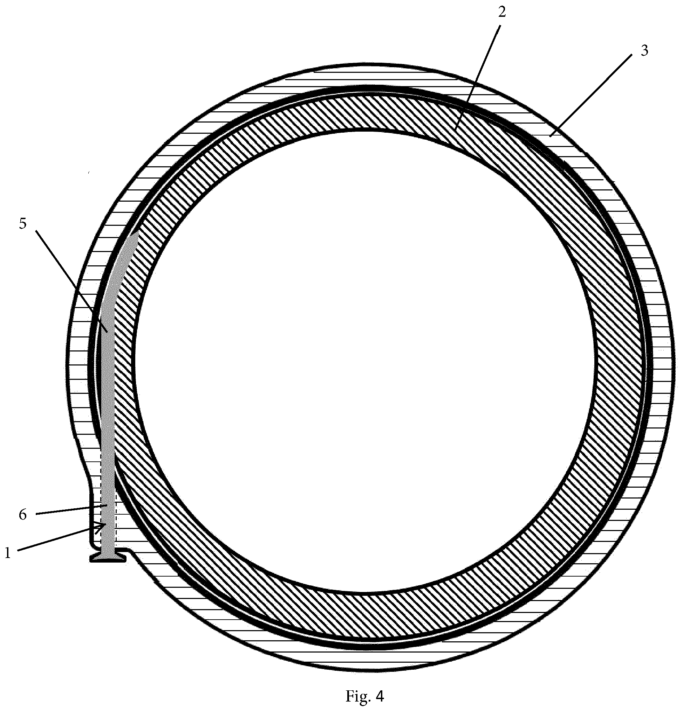

End segment 3 with inserted and installed air ventilation hose 2 in Fig. 4.

An installing mechanism 1 was fabricated for a ribbed air ventilation hose 2 having an outer diameter of 7.6 cm and an inner diameter of 6.31 cm, and a plastic polypropylene air ventilation end segment 3 having a cylindrical end part 4 having a length of 7 cm, an inner diameter of 7.74 cm and an outer diameter of 8.34 cm. A guide channel 6 has been drilled into the cylindrical part 4 of the end segment 3, 3 cm from the edge of the end segment 3, through which a cylinder-shaped installing space 19 passes, wherein a line 8 passing through the wall of the installing space 19 closest to the center of the circle 11 which forms the inner cross-section of the cylindrical part 4 of the end segment 3 lies on the secant 9. of the circle 11. Both the inlet and outlet of the drilled guide channel 6 are oval-shaped, since the wall of the end segment 3 is cylindrical. The shorter distance of the secant 9. from the inner wall of the cylindrical part 4 of the end segment 3 is on a line through the center of the circle 11 perpendicular to the secant 9, is 0.5 cm. The diameter of guide channel 6 was 0.3 cm. In addition, a pin as an installing pin 5 with a uniform diameter of 0.29 mm along the entire length of 6 cm, with a thread and a circular head with a diameter of 0.7 cm and a height of 0.3 cm and a tip, was also made of polypropylene.

Installing the air ventilation hose 2 into the air ventilation duct

The ribbed air ventilation hose 2 was inserted into the cylindrical end part 4 of the end segment 3 of the air ventilation duct. A installing pin 5 was inserted into the guide channel 6 of the cylindrical end part 4, the tip of which passed through the guide channel 6 and struck the rib 12 of the air ventilation hose 2. The air ventilation hose 2 was moved slowly outwardly from the end segment 3 until the longitudinal axis of the guide channel 6 was aligned with the groove 7 between the ribs 12 of the air ventilation hose 2, and the installing pin 5 was inserted deeper into the cylindrical end part 4 of the end segment 3, passing through the groove 7 between the ribs 12 of the air ventilation hose 2, until it struck the opposite inner wall of the cylindrical part 4 of the end segment 3. The installing pin 5 was then forcefully pushed into the guide channel 6 up to the head, thereby bending it against the opposite inner wall of the cylindrical part 4 of the end segment 3, and since the difference in diameter between the installing pin 5 and the guide channel 6 was only 0.01 cm, the installing pin 5 was sufficiently fixed in the guide channel 6. In this way, the ribbed air ventilation hose 2 is secured in the cylindrical part 4 of the end segment 3.

### Example 2

installing mechanism: four guide channels with reinforcing tunnel, two installing pins with head and tip and locking tabs

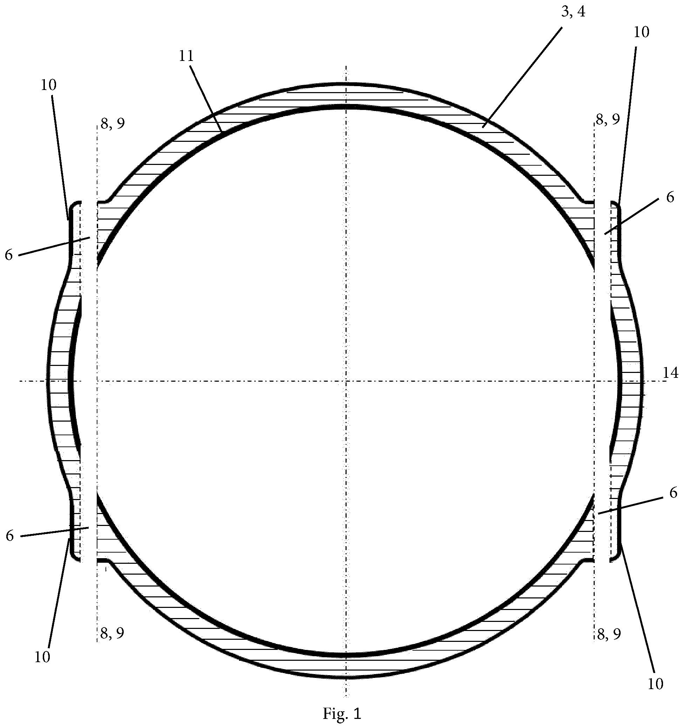

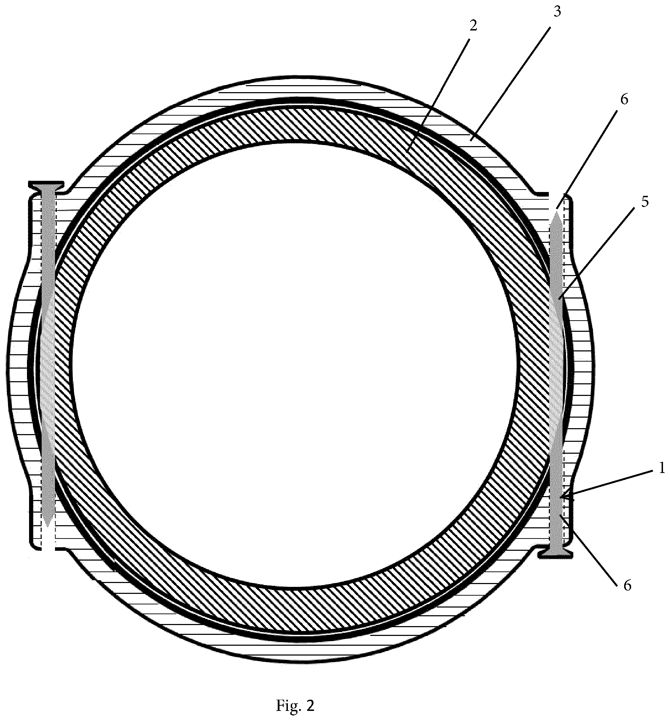

End segment 3 according to Fig. 1, with inserted and installed air ventilation hose 2 in Fig. 2.

An installing mechanism 1 was fabricated as a molding for a ribbed air ventilation hose 2 having an outer diameter of 7.6 cm and an inner diameter of 6.31 cm, and a molded plastic PS air ventilation end segment 3 having a cylindrical end part 4 having a length of 10 cm, an inner diameter of 8 cm and an outer diameter of 8.4 cm. In the cylindrical end part 4 of the end segment 3, 0.5 cm from the edge of the end segment 3, four guide channels 6 were formed, provided on the outer side of the end segment 3 with reinforcing tunnels 10 of 1 cm length, wherein a cylinder-shaped installing space 19 passes through the guide channel 6, wherein the line 8 passing through the wall of the installing space 19 of the first and second guide channels 6 closest to the center of the circle 11, which forms the inner cross-section of the cylindrical part 4 of the end segment 3, lies on the cross-section 9. of the circle 11. Likewise, the lines 8 of the third and fourth guide channels 6 lie on the second secant 9 of the circle 11 which forms the inner cross-section of the cylindrical part 4 of the end segment 3. The inlet opening of the guide channel 6 has a circular cross-section since it is located in the reinforcement tunnel 10, and the outlet opening of the guide channel 6 extending on the inner side of the end segment 3 has an oval shape since the wall of the end segment 3 has a cylindrical shape. The two secants 9 are parallel to each other and the shorter distance between each secant 9 and the inner wall of the cylindrical end part 4 of the end segment 3 on a line passing through the center of the circle 11, which is perpendicular to the secant 9, is 0,7 cm. The guide channel was formed with a square cross-section. The length of side of the square guide channel 6 was 0.25 cm. Furthermore, two installing pins 5 were made of polypropylene - pins with a square cross-section with a circular head with a diameter of 0.45 cm and a height of 0.15 cm and a tip. The installing pin 5 had a length of 6 cm and a uniform side length of 0.2 cm for the square cross-section square. The installing pin 5 was provided with four symmetrically spaced longitudinal linear fixing tabs 13 having a length of 1 cm located 0.3 cm from the head of the installing pin 5, wherein the outer cross-sectional length of the installing pin 5 including the tabs 13 was 0.24 cm.

Installing the air ventilation hose 2 into the air ventilation duct

The ribbed air ventilation hose 2 was inserted into the cylindrical end part 4 of the end segment 3 of the air ventilation duct. An installing pin 5 was inserted into the first guide channel 6 of the cylindrical end part 4, the tip of which passed through the guide channel 6 and struck the rib 12 of the air ventilation hose 2. The air ventilation hose 2 was moved slowly outwardly from the end segment 3 until the longitudinal axis of the guide channel 6 was aligned with the groove 7 between the ribs 12 of the air ventilation hose 2, and the installing pin 5 was inserted deeper into the cylindrical end part 4 of the end segment 3, passing through the groove 7 between the ribs 12 of the air ventilation hose 2, and then through the second guide channel 6 into which it entered. The installing pin 5 was then forcefully pushed into the guide channel 6 up to the head, thereby securing it by means of the fixing tabs 13 under the head against the inner wall of the guide channel 6. In this way, the ribbed air ventilation hose 2 is secured in the cylindrical part 4 of the end segment 3.

### Example 3

Installing mechanism: two guide channels on one secant with reinforcing tunnel, one installing pin

An installing mechanism 1 was fabricated as a molding for a ribbed air ventilation hose 2 having an outer diameter of 7.6 cm and an inner diameter of 6.31 cm, and a molded plastic PS air ventilation outlet end segment 3 having a cylindrical end part 4 having a length of 5 cm, an inner diameter of 7,8 cm and an outer diameter of 8.4 cm. In the cylindrical end part 4 of the end segment 3, 1 cm from the edge of the end segment 3, two guide channels 6 were formed, provided on the outer side of the end segment 3 with reinforcing tunnels 10 of 0,5 cm length, wherein a cylinder-shaped installing space 19

passes through the guide channel 6, wherein the line 8 of the first and second guide channel 6 passing through the wall of the installing space 19 closest to the center of the circle 11, which forms the inner cross-section of the cylindrical part 4 of the end segment 3, lies on one secant 9. of the circle 11 which forms the inner cross-section of the cylindrical part 4 of the end segment 3. The inlet opening of the guide channel 6 has a circular cross-section since it is located in the reinforcement tunnel 10, and the outlet opening of the guide channel 6 extending on the inner side of the end segment 3 has an oval shape since the wall of the end segment 3 has a cylindrical shape. The shorter distance of each of secants 9 from the inner wall of the cylindrical part 4 of the end segment 3 is on a line through the center of the circle 11 perpendicular to the secant 9, is 0.4 cm. The diameter of guide channel 6 was 0.3 cm. Furthermore, a pin was made of PVC as a installing pin 5 of irregular shape with a circular cross-section. The installing pin 5 had a length of 6 cm and a variable diameter, with the smallest diameter being 0.2 cm and the largest diameter being 0.28 cm.

Installing the air ventilation hose 2 into the air ventilation duct

The ribbed air ventilation hose 2 was inserted into the cylindrical end part 4 of the end segment 3 of the air ventilation duct. A installing pin 5 was inserted into the first guide channel 6 of the cylindrical end part 4, the end of which passed through the guide channel 6 and struck the rib 12 of the air ventilation hose 2. The air ventilation hose 2 was moved slowly outwardly from the end segment 3 until the longitudinal axis of the guide channel 6 was aligned with the groove 7 between the ribs 12 of the air ventilation hose 2, and the installing pin 5 was inserted deeper into the cylindrical end part 4 of the end segment 3, passing through the groove 7 between the ribs 12 of the air ventilation hose 2, and then through the second guide channel 6 into which it entered. In this way, the ribbed air ventilation hose 2 is secured in the cylindrical part 4 of the end segment 3.

### Example 4

Installing mechanism: two guide channels on two secants with reinforcing tunnel, two installing pins

End segment 3 with inserted and installed air ventilation hose 2 according to Fig. 3.

An installing mechanism 1 was fabricated as a molding for a ribbed air ventilation hose 2 having an outer diameter of 7.6 cm and an inner diameter of 6.31 cm, and a molded plastic polypropylene air ventilation outlet end segment 3 having a cylindrical end part4 having a length of 2 cm, an inner diameter of 7,8 cm and an outer diameter of 8.4 cm. In the cylindrical end part 4 of the end segment 3, 0.8 cm from the edge of the end segment 3, two through guide channels 6 were formed, provided on the outer side of the end segment 3 with reinforcing tunnels 10 of 0,8 cm length, wherein the line 8 of the installing space 19 of the first guide channel 6 lies on one secant 9 of the circle 11 which forms the inner cross-section of the cylindrical part 4 of the end segment 3. The line 8 of the second guide channel 6 lies on the second secant 9 of the circle 11 which forms the inner cross-section of the cylindrical part 4 of the end segment 3. The inlet opening of the guide channel 6 has a circular cross-section since it is located in the reinforcement tunnel 10, and the outlet opening of the guide channel 6 extending on the inner side of the end segment 3 has an oval shape since the wall of the end segment 3 has a cylindrical shape. Both secants 9 are parallel. The shorter distance of each of secants 9 from the inner wall of the cylindrical part 4 of the end segment 3 on a line through the center of the circle 11 perpendicular to the secant 9, is 0.5 cm. The diameter of guide channel 6 was 0.3 cm. In addition, two pins were made of polypropylene as installing pins 5 with a square cross-section of 0.3 cm, installing pins 5 were 3 cm long.

Installing the air ventilation hose 2 into the air ventilation duct

The ribbed air ventilation hose 2 was inserted into the cylindrical end part 4 of the end segment 3 of the air ventilation duct. A installing pin 5 was inserted into the first guide channel 6 of the cylindrical end part 4, the end of which passed through the guide channel 6 and struck the rib 12 of the air ventilation hose 2. The air ventilation hose 2 was moved slowly outwardly from the end segment 3 until the longitudinal axis of the guide channel 6 was aligned with the groove 7 between the ribs 12 of the air ventilation hose 2, and the installing pin 5 was inserted deeper into the cylindrical end part 4 of the end segment 3, passing through the groove 7 between the ribs 12 of the air ventilation hose 2. The procedure has been repeated with the second pin 5. In this way, the ribbed air ventilation hose 2 is secured in the cylindrical part 4 of the end segment 3.

### Example 5

Installing mechanism: two guide channels on a common axis on the circle secant, one installing pin

End segment 3 with inserted and installed air ventilation hose 2 in Fig. 11.

An installing mechanism 1 was fabricated for a ribbed air ventilation hose 2 having an outer diameter of 7.6 cm and an inner diameter of 6.31 cm, and a plastic polypropylene air ventilation end outlet segment 3 having a cylindrical end part 4 having a length of 4 cm, an inner diameter of 7.74 cm and an outer diameter of 8.34 cm. End segment 3 was made by pressing plastic into a mold. In the cylindrical part 4 of the end segment 3, 1 cm from the edge of the end segment 3, two guide channels 6 with an oval cross-section with a longer side of 0.8 cm and a shorter side of 0.4 cm, lying on a common axis, reinforced with tunnels 10, were made. The longer axis of the oval was directed towards the center of the circle 11, which forms the inner cross-section of the cylindrical part 4 of the end segment 3. A single installing space 19, which is a cylinder, passed through the two guide channels 6, a straight line 8 passed through the wall of the cylinder of the installing space 19, closest to the center of the circle 11, which forms the inner cross-section of the cylindrical part 4 of the end segment 3, and lying on the secant 9 of the circle 11. The distance of the secant 9 from the inner wall of the cylindrical part 4 of the end segment 3 on a line through the center of the circle 11 perpendicular to the secant 9, is 0.2 cm. In addition, a pin was also made of polypropylene as a installing pin 5 in the shape of a cylinder with an oval base with a longer side of 0.77 cm and a shorter side of 0.37 cm and a length of 7 cm.

Installing the air ventilation hose 2 into the air ventilation duct

The ribbed air ventilation hose 2 was inserted into the cylindrical end part 4 of the end segment 3 of the air ventilation duct. An installing pin 5 was inserted into the first guide channel 6 of the cylindrical end part 4, passing through the guide channel 6 and striking the rib 12 of the air ventilation hose 2. The air ventilation hose 2 was moved slowly outwardly from the end segment 3 until the longitudinal axis of the guide channel 6 was aligned with the groove 7 between the ribs 12 of the air ventilation hose 2, and the installing pin 5 was inserted into the space between the ribs of air ventilation hose 2, and then through the second guide channel 6 through which it exited. Since the difference in diameter between the installing pin 5 with the fixing tabs 13 and the guide channel 6 was only 0.03 cm, the installing pin 5 was sufficiently fixed in the guide channel 6. In this way, the ribbed air ventilation hose 2 is secured in the cylindrical part 4 of the end segment 3.

### Example 6

Installing mechanism: three guide channels of irregular shape, two on a common axis on the circle secant, one perpendicular to the hose, two installing pins, installing space

End segment 3 in Fig. 12.

An installing mechanism 1 was fabricated for a ribbed air ventilation hose 2 having an outer diameter of 7.6 cm and an inner diameter of 6.31 cm into a plastic polypropylene air ventilation outlet end segment 3 having a cylindrical end part 4 having a length of 10 cm, an inner diameter of 7.74 cm and an outer diameter of 8.34 cm. End segment 3 was made by pressing plastic into a mold. In the cylindrical part 4 of the end segment 3, 5 cm from the edge of the end segment 3, two guide channels 6 with a circular cross-section in the shape of a conical cone were made. The inlet opening of the guide channel 6 has an oval cross-section since the wall of the end segment 3 has a cylindrical shape, as well as the outlet opening of the guide channel 6 extending on the inner side of the end segment 3 has an oval shape since the wall of the end segment 3 has a cylindrical shape. The shorter axis of the inlet oval is 0.6 cm long and the shorter axis of the outlet oval is 0.3 cm long. A single installing space 19, which is a cylinder with a diameter of 0.3 cm, passes through the two guide channels, a line 8 passes through the wall of the installing space 19, closest to the center of the circle 11, which forms the inner cross-section of the cylindrical part 4 of the end segment 3, and lies on the secant 9. of the circle 11.

The third guide channel 6 in the shape of a truncated cone was made with the longitudinal axis perpendicular to the longitudinal axis of the first two channels 6. The diameter of its outer base, pointing outward from end segment 3, is 0.8 cm and the diameter of its inner base, pointing into end segment 3, is 0.4 cm. A cylindrical installing space 19 with a diameter of 0.4 cm also passes through this guide channel 6. Furthermore, three pins were made of polystyrene as installing pins 5 in the shape of a cylinder with a diameter of 0.3 cm and lengths of 7 and 3 cm.

Installing the air ventilation hose 2 into the air ventilation duct

The ribbed air ventilation hose 2 was inserted into the cylindrical end part 4 of the end segment 3 of the air ventilation duct. A installing pin 5 was inserted into the first guide channel 6 of the cylindrical end part 4, passing through the guide channel 6 and striking the rib 12 of the air ventilation hose 2. The air ventilation hose 2 was slowly moved outwardly from the end segment 3 until the longitudinal axis of the guide channel 6 passed through the groove 7 between the ribs 12 of the air ventilation hose 2. The installing pin 5 was then inserted into the space between the ribs of the air ventilation hose 2 and then into the second guide channel 6, through which it exited outwards from the opposite side. The second pin 5 was inserted into the last free guide channel 6 and reached the space between the ribs of the air ventilation hose 2. In this way, the ribbed air ventilation hose 2 is secured in the cylindrical part 4 of the end segment 3.

### Reference Signs List

1. installing mechanism
2. air ventilation hose
3. end segment
4. cylindrical end part of end segment 3
5. installing pin
6. through guide channel
7. groove between ribs 12 of the air hose 2
8. the line lying in the wall of the installing space 19 closest to the center of the circle 11
9. secant of circle that forms the cross-section of the cylindrical end part 4 of the end segment 3
10. reinforcing tunnel of the guide channel 6
11. circle that forms the cross-section of the cylindrical end part 4 of the end segment 3
12. rib of the air ventilation hose 2
13. fixing tab of the installing pin 5
14. line passing through the center of circle 11
15. projection of installing pin 5 without head as viewed from above
16. projection of guide channel 6 as viewed from above
17. cross-section of installing pin 5
18. cross-section of guide channel 6
19. installing space

### Industrial Applicability

Coupling, joining and connecting air hoses.

## Claims

1. An installation mechanism (1) of an air ventilation hose (2) in an end segment (3) with a
cylindrical end part (4) wherein it contains the end segment (3) with a cylindrical end part (4), an installing pin (5) and a guide channel (6),
wherein the through guide channel (6) is situated in a wall of the cylindrical end part (4) of the end segment (3), this guide channel (6) is cylindrical in shape and the guide channel (6) is determinated by a secant (9) of a circle (11) which forms an inner cross-section of the cylindrical end part (4) of the end segment (3), wherein the secant(9) is distanced from the center of the circle (11) by a minimum of an inner radius *r* of the air ventilation hose (2) and by a maximum of *r* + 6 mm, wherein the outer diameter of the air ventilation hose (2) is less than an inner diameter of the cylindrical end part of the end segment (3) and an inner diameter of the guide channel (6) is greater than an outer diameter of the installing pin (5), wherein the installing pin (5) comprises an installing pin (5) body which has a cylindrical rod shape,
the installing pin (5) body is terminated by a tip on one side and by a head on the other side and a projection of the installing pin (5) head along a longitudinal axis of the installing pin (5) extends beyond the projection of the installing pin (5) body,
wherein the installing pin (5) has a minimum length equivalent to ½ the length of the circle (11) secant (9), **characterized in that**
the installing pin (5) body is provided with fixing tabs (13) that are linear or point-like.

2. The installation mechanism (1) of an air ventilation hose (2) according to Claim 1, **characterized in that** the end segment (3) is a port, sleeve, reducer, pipe, curved pipe.

3. The installation mechanism (1) of an air ventilation hose (2) according to Claim 1, **characterized in that** the diameter of the installing pin (5) body is at least 0.1 mm smaller than the inner diameter of the guide channel (6).

4. The installation mechanism (1) of an air ventilation hose (2) according to Claim 1, **characterized in that** the guide channel (6) is provided with a reinforcing tunnel (10) of the guide channel (6) located on the outer side of the cylindrical end part (4) of the end segment (3) and extending the guide channel (6) outside the wall of the cylindrical end part (4) of the end segment (3).

5. The installation mechanism (1) of an air ventilation hose (2) according to Claim 1, **characterized in that** the cylindrical end part (4) of the end segment (3) had an inner diameter at most 5 mm greater than the outer diameter of the air ventilation hose (2).

6. The installation mechanism (1) of an air ventilation hose (2) according to Claim 1, **characterized in that** the installing pin (5) length is greater than the secant (9) of circle (11), which forms the cross-section of the cylindrical end part (4) of the end segment (3).

7. The installation mechanism (1) of an air ventilation hose (2) according to Claim 1 and 6, **characterized in that** it comprises at least two guide channels (6) with a common longitudinal axis (8) situated on the same secant (9) of the circle which forms the cross-section of the cylindrical end part (4) of the end segment (3) and one installing pin (5), used for passage through both guide channels (6).

8. The installation mechanism (1) of an air ventilation hose (2) according to Claim 7, **characterized in that** the longitudinal axes (8) of the two guide channels (6) are parallel.

9. The installation mechanism (1) of an air ventilation hose (2) according to Claim 1, **characterized in that** it comprises at least two guide channels (6) located in the cylindrical end part (4) of the end segment (3) opposite each other on two different secants (9) of circle (11) and two installing pins (5), each used for passage through one guide channel (6).

10. The installation mechanism (1) of an air ventilation hose (2) according to Claim 1, **characterized in that** the fixing tabs (13) are situated closer to the head than the tip of the installing pin (5).

11. The installation mechanism (1) of an air ventilation hose (2) according to Claim 1, **characterized in that** the fixing tabs (13) are situated along the entire body of the installing pin (5).

## Patentansprüche

1. Installationsmechanismus (1) eines Belüftungsschlauchs (2) in einem Endabschnitt (3) mit einem zylindrischen Endteil (4), wobei er den Endabschnitt (3) mit einem zylindrischen Endteil (4), einen Montagestift (5) und einen Führungskanal (6) enthält, wobei der durchgehende Führungskanal (6) in einer Wand des zylindrischen Endteils (4) des Endabschnitts (3) angeordnet ist, dieser Führungskanal (6) zylindrisch geformt ist und der Führungskanal (6) bestimmt ist durch eine Sekante (9) eines Kreises (11), die einen Innenquerschnitt des zylindrischen Endteils (4) des Endabschnitts (3) bildet, wobei die Sekante (9) von der Mitte des Kreises (11) um ein Minimum eines Innenradius *r* des Belüftungsschlauchs (2) und um ein Maximum von *r* + 6 mm beabstandet ist, wobei der Außendurchmesser des Belüftungsschlauchs (2) kleiner ist als ein Innendurchmesser des zylindrischen Endteils des Endabschnitts (3) und ein Innendurchmesser des Führungskanals (6) größer ist als ein Außendurchmesser des Montagestifts (5), wobei der Montagestift (5) einen Körper des Montagestifts (5) umfasst, der eine zylindrische Stabform aufweist, der Körper des Montagestifts (5) auf einer Seite durch eine Spitze und auf der anderen Seite durch einen Kopf abgeschlossen ist und sich ein Vorsprung des Kopfes des Montagestifts (5) entlang einer Längsachse des Körpers des Montagestifts (5) über den Vorsprung des Körpers des Montagestifts (5) hinaus erstreckt,
wobei der Montagestift (5) eine Mindestlänge aufweist, die ½ der Länge der Sekante (9) des Kreises (11) entspricht, **dadurch gekennzeichnet, dass** der Körper des Montagestiftes (5) mit Befestigungslaschen (13) versehen ist, die linear oder punktförmig sind.

2. Installationsmechanismus (1) eines Belüftungsschlauchs (2) nach Anspruch 1, **dadurch gekennzeichnet, dass** das Endsegment (3) ein Anschluss, eine Muffe, ein Reduzierstück, ein Rohr, ein gebogenes Rohr ist.

3. Installationsmechanismus (1) eines Belüftungsschlauchs (2) nach Anspruch 1, **dadurch gekennzeichnet, dass** der Durchmesser des Körpers des Montagestifts (5) mindestens 0,1 mm kleiner ist als der Innendurchmesser des Führungskanals (6).

4. Installationsmechanismus (1) eines Belüftungsschlauchs (2) nach Anspruch 1, **dadurch gekennzeichnet, dass** der Führungskanal (6) mit einem Verstärkungstunnel (10) des Führungskanals (6) versehen ist, der an der Außenseite des zylindrischen Endteils (4) des Endabschnitts (3) angeordnet ist und den Führungskanal (6) außerhalb der Wand des zylindrischen Endteils (4) des Endabschnitts (3) verlängert.

5. Installationsmechanismus (1) eines Belüftungsschlauchs (2) nach Anspruch 1, **dadurch gekennzeichnet, dass** der zylindrische Endteil (4) des Endabschnitts (3) einen Innendurchmesser aufweist, der höchstens 5 mm größer ist als der Außendurchmesser des Belüftungsschlauchs (2).

6. Installationsmechanismus (1) eines Belüftungsschlauchs (2) nach Anspruch 1, **dadurch gekennzeichnet, dass** die Länge des Montagestifts (5) größer ist als die Sekante (9) des Kreises (11), die den Querschnitt des zylindrischen Endteils (4) des Endabschnitts (3) bildet.

7. Installationsmechanismus (1) eines Belüftungsschlauchs (2) nach Anspruch 1 und 6, **dadurch gekennzeichnet, dass** er mindestens zwei Führungskanäle (6) mit einer gemeinsamen Längsachse (8) umfasst, die auf derselben Sekante (9) des Kreises liegen, der den Querschnitt des zylindrischen Endteils (4) des Endabschnitts (3) bildet, und einen Montagestift (5), der zum Durchgang durch beide Führungskanäle (6) verwendet wird.

8. Installationsmechanismus (1) eines Belüftungsschlauchs (2) nach Anspruch 7, **dadurch gekennzeichnet, dass** die Längsachsen (8) der beiden Führungskanäle (6) parallel sind.

9. Installationsmechanismus (1) eines Belüftungsschlauchs (2) nach Anspruch 1, **dadurch gekennzeichnet, dass** er mindestens zwei Führungskanäle (6), die im zylindrischen Endteil (4) des Endabschnitts (3) einander gegenüberliegend auf zwei verschiedenen Sekanten (9) des Kreises (11) angeordnet sind, und zwei Montagestifte (5) umfasst, die jeweils für den Durchgang durch einen Führungskanal (6) verwendet werden.

10. Installationsmechanismus (1) eines Belüftungsschlauchs (2) nach Anspruch 1, **dadurch gekennzeichnet, dass** die Befestigungslaschen (13) näher am Kopf als die Spitze des Montagestifts (5) angeordnet sind.

11. Installationsmechanismus (1) eines Belüftungsschlauchs (2) nach Anspruch 1, **dadurch gekennzeichnet, dass** die Befestigungslaschen (13) entlang des gesamten Körpers des Montagestifts (5) angeordnet sind.

## Revendications

1. Mécanisme d'installation (1) d'un tuyau de ventilation d'air (2) dans un segment d'extrémité (3) avec une partie d'extrémité cylindrique (4), où il contient le segment d'extrémité (3) avec une partie d'extrémité cylindrique (4), une goupille d'installation (5) et un canal de guidage (6), où le canal de guidage traversant (6) est situé dans une paroi de la partie d'extrémité cylindrique (4) du segment d'extrémité (3), ce canal de guidage (6) est de forme cylindrique et le canal de guidage (6) est déterminé par une sécante (9) d'un cercle (11) qui forme une section transversale intérieure de la partie d'extrémité cylindrique (4) du segment d'extrémité (3), où la sécante (9) est éloignée du centre du cercle (11) d'un minimum d'un rayon intérieur *r* du tuyau de ventilation d'air (2) et d'un maximum de *r* + 6 mm, où le diamètre extérieur du tuyau de ventilation d'air (2) est inférieur au diamètre intérieur de la partie d'extrémité cylindrique du segment d'extrémité (3) et le diamètre intérieur du canal de guidage (6) est supérieur au diamètre extérieur de la goupille d'installation (5), où la goupille d'installation (5) comprend un corps de goupille d'installation (5) qui a une forme de tige cylindrique, le corps de goupille d'installation (5) est terminé par une pointe d'un côté et par une tête de l'autre côté et une saillie de la tête de la goupille d'installation (5) le long d'un axe longitudinal de la goupille d'installation (5) s'étend au-delà de la saillie du corps de la goupille d'installation (5),
où la goupille d'installation (5) a une longueur minimale équivalente à ½ de la longueur du cercle (11) sécant (9), **caractérisé en ce que** le corps de la goupille d'installation (5) est pourvu de pattes de fixation (13) qui sont linéaires ou en forme de point.

2. Mécanisme d'installation (1) d'un tuyau de ventilation d'air (2) selon la revendication 1 **caractérisé en ce que** le segment d'extrémité (3) est un orifice, un manchon, un réducteur, un tuyau, un tuyau courbé.

3. Mécanisme d'installation (1) d'un tuyau de ventilation d'air (2) selon la revendication 1 **caractérisé en ce que** le diamètre du corps de la goupille d'installation (5) est inférieur d'au moins 0,1 mm au diamètre intérieur du canal de guidage (6).

4. Mécanisme d'installation (1) d'un tuyau de ventilation d'air (2) selon la revendication 1 **caractérisé en ce que** le canal de guidage (6) est pourvu d'un tunnel de renforcement (10) du canal de guidage (6) situé sur le côté extérieur de la partie d'extrémité cylindrique (4) du segment d'extrémité (3) et prolongeant le canal de guidage (6) à l'extérieur de la paroi de la partie d'extrémité cylindrique (4) du segment d'extrémité (3).

5. Mécanisme d'installation (1) d'un tuyau de ventilation d'air (2) selon la revendication 1 **caractérisé en ce que** l'extrémité cylindrique (4) du segment d'extrémité (3) a un diamètre intérieur supérieur d'au plus 5 mm au diamètre extérieur du tuyau de ventilation d'air (2).

6. Mécanisme d'installation (1) d'un tuyau de ventilation d'air (2) selon la revendication 1 **caractérisé en ce que** la longueur de la goupille d'installation (5) est supérieure à la sécante (9) du cercle (11), qui forme la section transversale de la partie d'extrémité cylindrique (4) du segment d'extrémité (3).

7. Mécanisme d'installation (1) d'un tuyau de ventilation d'air (2) selon la revendication 1 et 6 **caractérisé en ce qu'**il comprend au moins deux canaux de guidage (6) avec un axe longitudinal commun (8) situé sur la même sécante (9) du cercle qui forme la section transversale de la partie d'extrémité cylindrique (4) du segment d'extrémité (3) et un axe d'installation (5), utilisé pour le passage à travers les deux canaux de guidage (6).

8. Mécanisme d'installation (1) d'un tuyau de ventilation d'air (2) selon la revendication 7 **caractérisé en ce que** les axes longitudinaux (8) des deux canaux de guidage (6) sont parallèles.

9. Mécanisme d'installation (1) d'un tuyau de ventilation d'air (2) selon la revendication 1 **caractérisé en ce qu'**il comprend au moins deux canaux de guidage (6) situés dans la partie d'extrémité cylindrique (4) du segment d'extrémité (3) en vis-à-vis l'un de l'autre sur deux sécantes différentes (9) du cercle (11) et deux goupilles d'installation (5), chacune utilisée pour le passage à travers un canal de guidage (6).

10. Mécanisme d'installation (1) d'un tuyau de ventilation d'air (2) selon la revendication 1 **caractérisé en ce que** les pattes de fixation (13) sont situées plus près de la tête que de la pointe de la goupille d'installation (5)

11. Mécanisme d'installation (1) d'un tuyau de ventilation d'air (2) selon la revendication 1 **caractérisé en ce que** les pattes de fixation (13) sont situées tout le long du corps de la goupille d'installation (5).
